# FASCICULE DE BREVET EUROPEEN

(11) **EP 3 213 465 B1**
(45) Date de publication et mention de la délivrance du brevet: **17.03.2021**
(21) Numéro de dépôt: 15805565.7
(22) Date de dépôt: 16.10.2015
(51) Int. Cl.: H04L 12/28, G06Q 50/00

(54) **PROCÉDÉ ET SYSTÈME DE GESTION D'ENTITÉS CONNECTÉES**
VERFAHREN UND SYSTEME ZUR VERWALTUNG VERBUNDENER EINHEITEN
METHOD AND SYSTEM FOR MANAGING CONNECTED ENTITIES

(30) Priorité: 27.10.2014 FR 1460328
(43) Date de publication de la demande: 06.09.2017
(73) Titulaire: ORANGE, 75015 Paris (FR)
(72) Inventeur: SUZANNE, Benoît, 92410 Ville D'Avray (FR); GALLOYER, Jérôme, 93450 L'ile Saint Denis (FR)
(86) Numéro de dépôt international: PCT/FR2015/052783
(87) Numéro de publication internationale: WO 2016/066920

(56) Documents cités:
- WO-A1-2014/112362
- US-A1- 2014 211 099
- KAMILARIS A ET AL: "Social networking of the Smart Home", PERSONAL INDOOR AND MOBILE RADIO COMMUNICATIONS (PIMRC), 2010 IEEE 21ST INTERNATIONAL SYMPOSIUM ON, IEEE, PISCATAWAY, NJ, USA, 26 septembre 2010 (2010-09-26), pages 2632-2637, XP031838054, ISBN: 978-1-4244-8017-3

## Description

La présente invention concerne le domaine de la gestion d'une pluralité d'entités communicantes, et en particulier la gestion d'objets connectés.

L'invention s'applique avantageusement à un réseau d'objets connectés, par exemple un réseau privé d'un utilisateur.

On entend par objet connecté tout objet apte à mettre en œuvre des actions données et présentant en outre une interface de communication pour partager des informations sur un réseau. Aucune restriction n'est attachée à l'interface de communication considérée. Par la suite, l'exemple d'objets connectés à un réseau sans-fil par une interface de type Wi-fi est considéré, à titre purement illustratif.

Aucune restriction n'est par ailleurs attachée aux actions mises en œuvre par les objets connectés : un détecteur de mouvement détecte des mouvements, un capteur de température mesure la température d'une pièce dans laquelle il se situe, un radiateur chauffe une pièce dans laquelle il se trouve, une cafetière prépare du café, etc. En outre, des informations peuvent être remontées à un réseau local auquel accèdent les objets connectés, afin que l'utilisateur puisse les consulter.

A l'heure actuelle, les objets connectés fonctionnent indépendamment les uns des autres si bien qu'une information acquise par un objet connecté n'est pas exploitable par les autres objets connectés accédant au même réseau.

Il est connu de la publication WO2014/112362 un procédé basé sur la position d'un utilisateur de smartphone, permettant de lui transmettre sur un fil d'actualité une recommandation d'opération d'un appareil, lorsque l'utilisateur est proche de son domicile. Il n'existe ainsi pas de solution connue pour automatiser les actions mises en œuvre par des objets connectés à un réseau d'un utilisateur.

La présente invention vient améliorer la situation.

A cet effet, un premier aspect de l'invention concerne un procédé de gestion d'une pluralité d'entités telle que définie dans la revendication 1.

On entend par « fil d'actualités » une succession de publications d'événements, éventuellement estampillés temporellement. Un fil d'actualités peut par exemple être associé au compte d'un utilisateur sur un réseau social, et le fil d'actualités peut alors être consulté par l'utilisateur via une interface utilisateur d'un dispositif tel qu'un ordinateur, une tablette tactile, ou encore un Smartphone. Les événements peuvent dans ce cas être des messages, des photos ou tout autre contenu numérique. On entend par règle toute expression de la forme « Si Condition(donnée_d'événement)=OK alors Action ». La condition peut par exemple être une comparaison avec un seuil donné, notamment lorsque la donnée d'événement prend une valeur numérique (mesure, estimation, valeur moyenne, etc). Comme détaillé précédemment, aucune restriction n'est attachée à l'action mise en œuvre par la deuxième entité : elle regroupe à la fois le déclenchement d'actions telles que le chauffage d'une pièce, l'allumage d'un appareil, ou plus généralement toute action mise en œuvre par un actuateur, mais elle couvre également la prise de mesures lorsque la deuxième entité est un capteur.

Les entités peuvent être des objets connectés. Ainsi, chaque publication d'un objet connecté peut concerner d'autres objets connectés, qui sont détectés au moyen de règles prédéfinies, sans requérir l'intervention de l'utilisateur. Le fil d'actualités présente une fonction double :
- il permet d'une part la mise en relation des entités d'un utilisateur afin de partager des informations (données d'événements) et d'entreprendre de manière automatisée des actions correctrices ;
- mais il permet d'autre part le suivi par l'utilisateur des actions entreprises par les entités.

L'action de publier des données sur un fil d'actualités a ainsi un rôle de déclencheur d'actions et un rôle informatif pour l'utilisateur.

Selon un mode de réalisation, le procédé peut comprendre une étape préalable d'enregistrement des première et deuxième entités en tant qu'entités de l'utilisateur, auprès d'une unité de gestion.

Un tel enregistrement peut par exemple consister en la création d'un compte de réseau social pour chacune des première et deuxième entités, et en l'association de ces comptes avec le compte de l'utilisateur, de manière à permettre la publication et la consultation du fil d'actualités de l'utilisateur.

Selon un mode de réalisation, le procédé peut comprendre en outre, suite à l'enregistrement d'une entité du deuxième type en tant qu'entité de l'utilisateur auprès de l'unité de gestion, le stockage d'un ensemble de règles en association avec l'entité du deuxième type enregistrée, dans une base de données. L'unité de gestion peut être apte à mettre en œuvre la détection de la correspondance entre la règle associée à la deuxième entité du second type et la donnée d'événement publiée, par consultation de la base de données, et à transmettre un ordre à la deuxième entité du second type, l'ordre identifiant l'action à mettre en œuvre (l'action comprise dans la règle mise en correspondance avec la donnée d'évènement publiée).

Ce mode de réalisation (appelé premier mode de réalisation par la suite) permet ainsi de centraliser l'intelligence nécessaire à l'interprétation des données d'événement publiées, en vue d'automatiser la mise en œuvre d'actions correctrices. En outre, l'utilisateur peut consulter de manière centralisée les différents ensembles règles associés aux entités du second type, et la modification des règles est ainsi facilitée. En effet, les ensembles de règles stockées dans la base de données peuvent être modifiables par un utilisateur via une interface utilisateur. L'utilisateur peut par exemple disposer d'un dispositif tel qu'un ordinateur, une tablette tactile ou Smartphone, sur lequel une application dédiée au réseau social hébergeant le fil d'actualités peut être installée.

En complément, le procédé peut comprendre en outre, suite à l'enregistrement d'une entité du deuxième type auprès de l'unité de gestion, la transmission d'un ensemble de règles de l'entité du deuxième type à l'unité de gestion en vue du stockage de l'ensemble de règles en association avec l'entité du deuxième type enregistrée dans la base de données.

Les règles peuvent ainsi être définies par défaut par l'entité du deuxième type, ce qui évite la construction de règles au niveau de l'unité de gestion, qui peut potentiellement gérer un grand nombre d'entités. De telles règles par défaut peuvent ensuite être modifiées par l'utilisateur accédant à l'unité de gestion via une interface utilisateur.

En variante, chaque entité du deuxième type peut stocker localement un ensemble de règles, et, sur publication d'une donnée d'évènement, chaque entité du deuxième type peut comparer la donnée d'évènement publiée avec l'ensemble de règles stocké localement en vue de la détection d'une correspondance entre une règle et la donnée d'évènement publiée.

Ce mode de réalisation (appelé deuxième mode de réalisation par la suite) permet de décentraliser l'intelligence entre les différentes entités du second type et de rendre ainsi le fonctionnement des entités autonome. Chaque entité surveille ainsi le fil d'actualités afin de déterminer si des actions sont à mettre en œuvre en réponse à une donnée d'évènement publiée. Aucune étape préalable de déclaration des règles auprès de l'unité de gestion n'est ainsi requise, et les échanges entre les entités et le réseau sont ainsi réduites.

Selon un mode de réalisation, le procédé peut comprendre en outre la publication, par la deuxième entité, d'un message sur le fil d'actualités, le message indiquant l'action mise en œuvre par la deuxième entité.

Ainsi, le suivi par l'utilisateur des actions mises en œuvre est rendu possible. Le message peut en outre être estampillé temporellement.

En complément, le procédé peut comprendre en outre, sur réception d'une entrée de l'utilisateur à associer au message publié par la deuxième entité, une étape de mise à jour de la règle correspondant à la donnée d'événement publiée, en fonction de l'entrée de l'utilisateur.

Un tel mode de réalisation permet de mettre en œuvre un apprentissage par les entités du deuxième type, dont les actions futures sont conditionnées par les retours de l'utilisateur sur les actions précédemment mises en œuvre. L'entrée peut être un commentaire de l'utilisateur ou encore un clic de l'utilisateur sur un élément graphique tel qu'une icône affichée en regard de la publication du message.

Selon un mode de réalisation, au moins une entité du premier type peut être un capteur apte à publier une donnée de mesure en tant que donnée d'évènement.

Dans un mode de réalisation, au moins une règle peut comprendre en outre un identifiant d'une entité du premier type, et la deuxième entité du second type peut mettre en œuvre l'action comprise dans la règle mise en correspondance avec la donnée d'évènement publiée, uniquement si l'identifiant d'entité du premier type compris dans la règle correspond à la première entité ayant publié la donnée d'évènement.

Une telle réalisation est avantageuse en ce qu'elle permet d'assurer que l'action mise en œuvre est pertinente. En effet, si la donnée d'événement est une température mesurée dans une première pièce, seule la mise en marche du radiateur situé dans la première pièce peut être souhaitable pour l'utilisateur. De même, si la donnée d'événement est la détection d'une présence dans un couloir, il est inutile d'allumer l'ensemble des lampes de l'habitation de l'utilisateur, seul l'allumage de la lampe du couloir pouvant être souhaité par l'utilisateur.

Un deuxième aspect de l'invention concerne un programme informatique comportant des instructions pour la mise en œuvre du procédé selon le premier aspect de l'invention, lorsque ces instructions sont exécutées par un processeur.

Un troisième aspect de l'invention concerne un système tel que défini dans la revendication 12.

D'autres caractéristiques et avantages de l'invention apparaîtront à l'examen de la description détaillée ci-après, et des dessins annexés sur lesquels:
- la figure 1 illustre un système selon un mode de réalisation de l'invention ;
- la figure 2 est un diagramme illustrant les étapes d'un procédé selon un mode de réalisation de l'invention.
- les figure 3.a et 3.b présentent des diagrammes d'étapes mises en œuvre dans le système de la figure 1, selon des deuxième et premier modes de réalisation ;
- la figure 4 illustre un dispositif selon un mode de réalisation de l'invention.

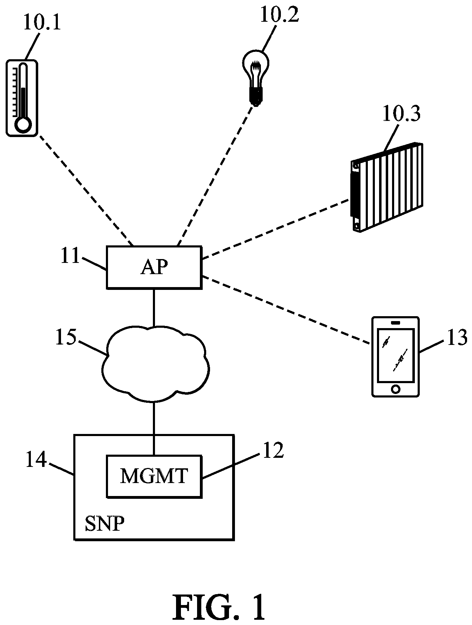

La **figure 1** illustre un système de gestion d'une pluralité d'entités 10.1 à 10.3 selon un mode de réalisation de l'invention. Les entités gérées sont des objets connectés. A titre illustratif, le système peut ainsi comprendre un thermomètre 10.1 apte à mesurer la température dans une pièce donnée, une lampe 10.2, et un radiateur 10.3 apte à chauffer une pièce donnée. Comme détaillé dans ce qui suit, la pièce dans laquelle se situe le thermomètre 10.1 et la pièce dans laquelle se situe le radiateur 10.3 peuvent être une même et unique pièce, ou peuvent être deux pièces distinctes.

Les entités 10.1, 10.2 et 10.3 sont des objets connectés et disposent ainsi d'interfaces respectives permettant l'accès à un réseau via un point d'accès 11, pouvant être une borne Wi-fi par exemple. Un unique point d'accès 11 a été représenté. Toutefois, l'invention couvre également les cas dans lesquels les objets 10.1 à 10.3 accèdent au réseau via des points d'accès distincts.

Le point d'accès 11 permet aux entités 10.1 à 10.3 d'accéder à un réseau comprenant une unité de gestion 12. L'unité de gestion 12 peut être intégrée dans un serveur mettant en œuvre un service accessible via un réseau 15, tel que le réseau internet par exemple. Dans ce qui suit, l'unité de gestion 12 est intégrée dans un serveur 14 de réseau social, à titre illustratif. En variante, l'unité de gestion 12 peut être intégré au réseau local de l'utilisateur et communiquer à distance avec le serveur de réseau social 14 via internet 15. Une autre variante peut prévoir l'intégration de l'unité de gestion 12 dans un dispositif utilisateur 13.

De manière classique, le serveur de réseau social 14 met en relation des comptes d'utilisateurs et permet le partage de données entre les utilisateurs. Par exemple, le compte de chaque utilisateur du réseau social est associé à un fil d'actualités qui lui est propre. Des utilisateurs mis en relation (des utilisateurs « amis ») peuvent publier des messages, des photos, ou tout autre contenu, sur leurs fils d'actualités et sur les fils d'actualités des utilisateurs avec lesquels ils sont mis en relation.

L'utilisateur peut accéder à son fil d'actualité par l'intermédiaire du dispositif 13, tel qu'un ordinateur portable ou de bureau, une tablette tactile, un téléphone de type Smartphone par exemple, ou tout autre dispositif apte à accéder au réseau internet 15 via le point d'accès 11 (par exemple par interface Wi-fi), via une interface filaire (câble Ethernet par exemple) ou via un réseau d'accès mobile (de type 3G/4G par exemple). A cet effet, une application liée au réseau social peut être installée sur le dispositif 13, permettant ainsi l'accès au serveur de réseau social 14. Le dispositif 13 intègre une interface utilisateur (un écran tactile par exemple) apte à afficher le fil d'actualités de l'utilisateur sur le réseau social.

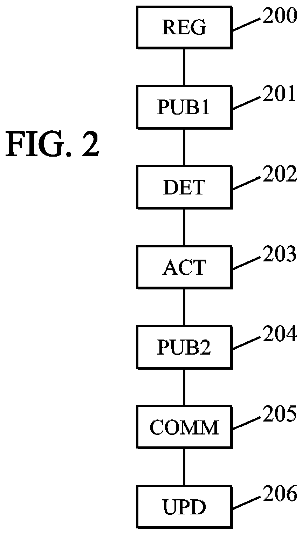

La figure 2 est un diagramme illustrant les étapes d'un procédé selon un mode de réalisation de l'invention.

A une étape 200, les entités 10.1, 10.2 et 10.3 peuvent s'enregistrer auprès de l'unité de gestion 12. Par exemple, une nouvelle entité rejoignant le réseau d'entités connectés peut transmettre un identifiant qui lui est propre à l'unité de gestion 12, en vue de la création d'un compte propre à chaque entité. Les entités peuvent alors être mises en relation sur le réseau social, par un mécanisme d'ajout à une liste d'amis de l'utilisateur possédant les entités 10.1 à 10.3, par exemple.

Selon l'invention, les entités 10.1, 10.2 et 10.3 peuvent appartenir à au moins un type parmi un premier type et un second type. Les entités du premier type sont aptes à publier une ou plusieurs données d'évènement sur le fil d'actualité de l'utilisateur avec lequel elles ont été mises en relation. Dans l'exemple illustré sur la figure 1, le thermomètre appartient au premier type, et peut publier des mesures de température sur le fil d'actualités de l'utilisateur.

Les entités du second type sont associées à des ensembles respectifs de règles comprenant des données d'évènements en association avec des actions respectives. Par exemple, la lampe 10.2 (située par exemple dans un couloir) peut être associée à la règle suivante :
- si une présence est détectée dans le couloir, alors je m'allume.

Le radiateur 10.3 peut être associé à l'ensemble de règles suivant :
- si la température dans la pièce est inférieure à 17°C, je me mets en marche en fonction confort ;
- si la température dans la pièce est comprise entre 17°C et 20°C, je me mets en marche en fonction économique ;
- si la température dans la pièce est supérieure à 20°C, je m'éteints.

Une entité peut appartenir à la fois au premier type et au deuxième type. Par exemple, une entité peut à la fois prendre des mesures et mettre en œuvre une action (un radiateur comprenant un capteur de température intégré par exemple).

Selon un premier mode de réalisation de l'invention, l'ensemble de règles associées à une entité du second type est communiqué à l'unité de gestion 12 lors de l'étape 200 d'enregistrement, et l'unité de gestion 12 peut alors stocker dans une base de données interne une association entre l'ensemble de règles reçu et l'entité du second type enregistré. Selon un deuxième mode de réalisation de l'invention, chaque entité du second type stocke localement son propre ensemble de règles.

A une étape 201, une donnée d'évènement est publiée sur le fil d'actualité par une première entité du premier type. Par exemple, le thermomètre 10.1 remonte une mesure de température à l'unité de gestion 12 qui publie la température mesurée sur le fil d'actualités de l'utilisateur. Aucune restriction n'est attachée à la manière dont la publication d'une donnée d'événement est déclenchée. Par exemple, une entité du premier type peut publier des données d'événements à une fréquence donnée. En variante, la publication d'une donnée d'événement peut être provoquée lorsqu'une donnée mesurée par la première entité du premier type devient supérieure ou inférieure à un seuil. Le seuil peut être préfixé ou configurable par l'utilisateur.

La donnée d'événement peut en outre être publiée en association avec une estampille temporelle. La publication de données d'événements estampillées permet de faciliter la consultation des événements par l'utilisateur.

A une étape 202, une correspondance entre une règle associée à une deuxième entité du second type et la donnée d'événement publiée (la température mesurée par le thermomètre 10.1) peut être détectée.

Selon le premier mode de réalisation décrit ci-avant, dans lequel l'unité de gestion 12 dispose des ensembles de règles de toutes les entités du second type, l'étape 202 est mise en œuvre dans l'unité de gestion 12. A cet effet, l'unité de gestion 12 interprète la donnée d'évènement publiée afin de déterminer si une entité du second type est concernée par une telle publication. Dans l'exemple présenté, la donnée publiée est une mesure de température, et seul le radiateur 10.3 est par conséquent concerné (la règle associée à la lampe 10.2 étant uniquement concernée par les données de présence). L'une des trois actions décrites ci-dessus (activation en mode confort, activation en mode économique, désactivation) est déduite de la mesure de température, et un ordre est envoyé à une étape 203 au radiateur 10.3, l'ordre étant assorti de l'action à entreprendre. Le radiateur 10.3 met alors en œuvre l'action ordonnée. Par exemple, si la température publiée est de 19°C, le radiateur 10.3 actionne le mode économique.

Ce premier mode de réalisation permet ainsi de centraliser l'intelligence nécessaire à l'interprétation des données d'événement publiées, en vue d'automatiser la mise en œuvre d'actions correctrices. En outre, l'utilisateur peut consulter de manière centralisée les différents ensembles de règles associés aux entités du second type, et la modification des règles est ainsi facilitée. L'utilisateur peut par exemple modifier les seuils de température du radiateur 10.3 en se connectant au serveur du réseau social 14.

Selon le deuxième mode de réalisation décrit ci-avant, chaque entité du second type stocke localement un ensemble de règles, et l'étape 202 est alors mise en œuvre dans chacune des entités du second type. La lampe 10.2 compare ainsi la donnée d'événement publiée (la température mesurée) avec l'unique règle qu'elle stocke. La règle ne prenant aucunement en compte la température, aucune action n'est entreprise par la lampe 10.2. Le radiateur 10.3 compare également la donnée publiée (la température mesurée) avec l'ensemble de règles qu'il stocke. Toutes les règles stockées étant concernées par la mesure de température, l'action à mettre en œuvre est ainsi déduite à l'étape 20 de la température mesurée. Par exemple, si la température mesurée et publiée est de 19°C, le radiateur 10.3 actionne le mode économique.

Le deuxième mode de réalisation permet de décentraliser l'intelligence entre les différentes entités du second type. Chaque entité surveille ainsi le fil d'actualités afin de déterminer si des actions sont à mettre en œuvre en réponse à une donnée d'évènement publiée. Aucune étape préalable de déclaration des règles auprès de l'unité de gestion 12 n'est ainsi requise, et les échanges entre les entités et le réseau sont ainsi réduits.

La description qui suit, sauf mention contraire, est indifféremment applicable au premier mode de réalisation et au deuxième mode de réalisation.

Afin d'assurer que le radiateur 10.3 prenne uniquement en compte la température mesurée dans la pièce dans laquelle il se situe, l'ensemble de règles stockées (localement ou au niveau de l'unité de gestion 12 selon le mode de réalisation considéré) peut en outre comprendre un identifiant du thermomètre situé dans la même pièce. A cet effet, l'utilisateur peut, par le biais de l'interface utilisateur du dispositif 13, associer certaines des entités connectées. Dans ce cas, l'action est mise en œuvre par le radiateur 10.3 uniquement si la règle correspondant à la donnée d'évènement publiée par le thermomètre 10.2, comprend un identifiant du thermomètre 10.2. Aucune restriction n'est attachée à l'identifiant considéré. Il peut par exemple s'agir du nom sous lequel le thermomètre 10.2 s'est enregistré auprès du réseau social pour créer un compte.

A une étape 204 optionnelle, chaque entité du second type qui a mis en œuvre une action en réaction à la donnée d'évènement publiée peut publier un message sur le fil d'actualités de l'utilisateur. A cet effet, le message est transmis à l'unité de gestion 12 via le point d'accès 11. Le message peut indiquer l'action mise en œuvre par l'entité du second type. Dans l'exemple considéré, le radiateur 10.3 peut ainsi publier un message « Activation du mode économique » sur le fil d'actualités de l'utilisateur, ce qui permet avantageusement à l'utilisateur d'avoir un suivi des actions opérées par les entités connectées à son réseau local. En outre, chaque message publié sur le fil d'actualité peut être assorti d'une estampille temporelle, permettant ainsi à l'utilisateur de suivre la chronologie des événements.

A une étape optionnelle 205, une entrée de l'utilisateur est reçue en réaction à la publication du message. Une telle entrée peut être un commentaire du type « j'aime » ou « je n'aime pas » par exemple, ou encore « la prochaine fois, ne pas baisser autant le chauffage ». En variante, l'entrée peut être un clic de l'utilisateur sur un élément graphique tel qu'une icône affichée en regard de la publication du message (bouton de type « Like » par exemple). L'ensemble de règles associé à l'entité du deuxième type ayant publié le message peut alors être mis à jour, à une étape 206, en fonction de l'entrée de l'utilisateur. Par exemple, si l'utilisateur a commenté le message «Activation du mode économique» en indiquant « je n'aime pas », les seuils de température utilisés dans l'ensemble de règles du radiateur 10.3 peuvent être modifiés (par exemple, les seuils de 17°C et de 20°C sont relevés à 20 °C et 23°C, respectivement). Aucune restriction n'est attachée aux mécanismes de mise à jour des règles, qui peuvent dépendre des souhaits de l'utilisateur, de l'environnement (surface d'un appartement, nombre de radiateurs, pièce considérée, etc), et de tout autre facteur.

Ainsi, selon le premier mode de réalisation précité, l'unité de gestion 12 détecte l'entrée de l'utilisateur et met à jour au moins une règle qu'il stocke en association avec l'entité du deuxième type dont le message a été commenté.

Selon le deuxième mode de réalisation, l'entité du deuxième type dont le message a été commenté est notifiée de l'entrée de l'utilisateur, et peut, à une étape 206, mettre à jour au moins une règle qu'elle stocke localement.

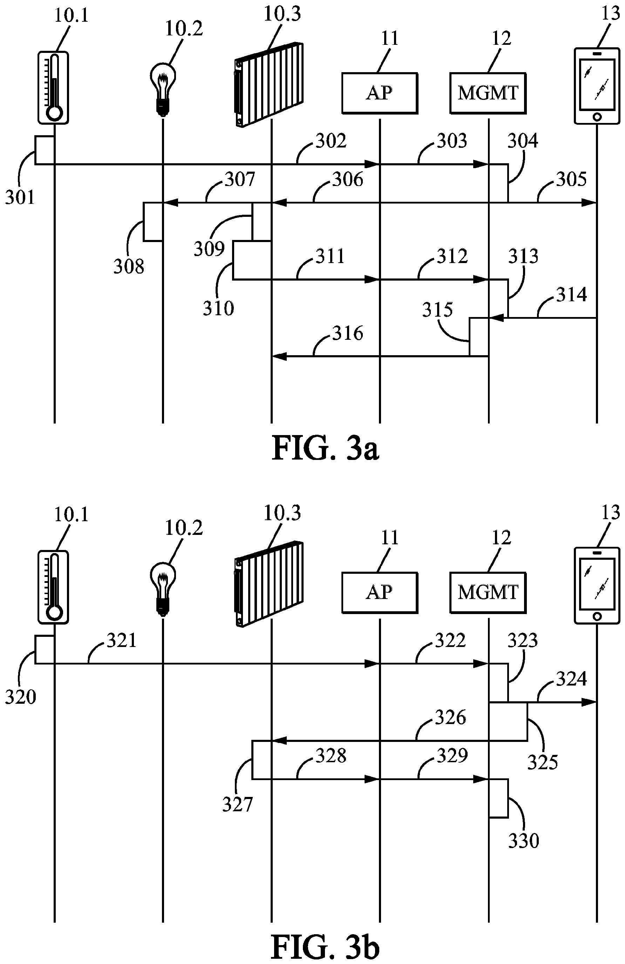

Les figures 3.a et 3.b donnent des exemples de successions d'étapes mises en œuvre dans le système de la figure 1, selon les deuxième et premier modes de réalisation de l'invention respectivement.

La figure 3.a est ainsi un diagramme d'étapes illustrant le procédé selon le deuxième mode de réalisation de l'invention.

A une étape 301, le thermomètre 10.1 mesure la température dans une pièce donnée. Dans cet exemple, nous considérons à titre illustratif que le thermomètre 10.1 se situe dans la même pièce que le radiateur 10.3. La température mesurée est transmise à une étape 302 au point d'accès 12, par voie Wi-fi par exemple, et transférée par le point d'accès 11 à l'unité de gestion 12 via le réseau internet 15 à une étape 303. A une étape 304, l'unité de gestion 12 publie la température mesurée sur le fil d'actualités de l'utilisateur, en indiquant que cette publication provient du compte associé au thermomètre 10.1. A une étape 305, l'utilisateur peut être notifié de la publication sur son fil d'actualités. A des étapes 306 et 307, le radiateur 10.3 et la lampe 10.2 sont notifiés du fait qu'une donnée d'évènement a été publiée sur le fil d'actualité de l'utilisateur.

A une étape 308, la lampe 10.2 compare la donnée d'événement publiée avec la règle qu'elle stocke et détermine ainsi qu'aucune action n'est à entreprendre.

A une étape 309, le radiateur 10.3 compare la donnée d'événement publiée avec la règle qu'elle stocke et détermine qu'une action est à entreprendre, l'action étant fonction de la valeur de la température mesurée. La température mesurée étant de 19°C, l'action d'activer le mode économique est mise en œuvre par le radiateur 10.3 a une étape 310. A une étape 311 optionnelle, un message indiquant « Le mode économique a été activé » est transmis au point d'accès 11, qui transmet le message à l'unité de gestion à une étape 312. A une étape 313, l'unité de gestion publie le message sur le fil d'actualités. A une étape 314, l'utilisateur commente le message publié en indiquant «je n'aime pas ». Le commentaire de l'utilisateur est publié à une étape 315, et le radiateur 10.3 est notifié de l'entrée de l'utilisateur afin qu'il mette optionnellement à jour l'ensemble de règles qu'il stocke.

La figure 3.b est ainsi un diagramme d'étapes illustrant le procédé selon le premier mode de réalisation de l'invention.

A une étape 320, le thermomètre 10.1 mesure la température dans une pièce donnée. Dans cet exemple, nous considérons à titre illustratif que le thermomètre 10.1 se situe dans la même pièce que le radiateur 10.3. La température mesurée est transmise à une étape 321 au point d'accès 12, par voie Wi-fi par exemple, et transférée par le point d'accès 11 à l'unité de gestion 12 via le réseau internet 15 à une étape 322. A une étape 323, l'unité de gestion 12 publie la température mesurée sur le fil d'actualités de l'utilisateur, en indiquant que cette publication provient du compte associé au thermomètre 10.1. A une étape 324, l'utilisateur peut être notifié de la publication sur son fil d'actualités. A une étape 325, l'unité de gestion 12 consulte la base de données stockant les ensembles de règles avec les entités du second type afin de détecter une éventuelle correspondance entre une règle associée à une entité du second type et la donnée d'événement publiée. Dans l'exemple considéré, les règles du radiateur 10.3 correspondent à l'événement détecté (mesure de température), et ainsi une action peut être déduite de l'ensemble de règles associé au radiateur 10.3. Un ordre est transmis à une étape 326 au radiateur 10.3, l'ordre indiquant l'action à mettre en œuvre (activation du mode économique dans l'exemple considéré). Le radiateur met en œuvre l'action indiquée à une étape 327, et peut envoyer, de manière optionnelle, à une étape 328, un message au point d'accès 11 indiquant « Activation du mode économique ». Le message est transmis par le point d'accès 11 à l'unité de gestion 12 à une étape 329 et le message est publié à une étape 330. Des étapes optionnelles liées à une éventuelle entrée de l'utilisateur en vue de commenter le message publié n'ont pas été représentées, mais peuvent être identiques aux étapes 314 à 316 illustrées sur la figure 3.a.

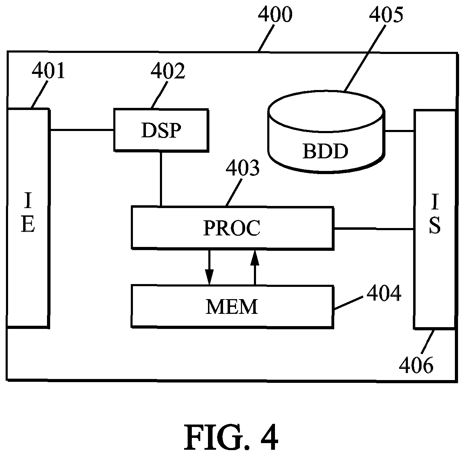

La figure 4 représente dispositif 400 selon un mode de réalisation de l'invention, pouvant être intégré dans l'unité de gestion 12.

Le dispositif 400 comprend une mémoire vive 404 et un processeur 403 pour stocker des instructions permettant la mise en œuvre d'étapes du procédé décrit ci-avant. Le dispositif comporte aussi une base de données 405 pour le stockage de données destinées à être conservées après l'application du procédé. La base de données 405 peut notamment comprendre, selon le premier mode de réalisation décrit ci-avant, les ensembles de règles associés respectivement aux entités du second type. Le dispositif 400 comporte en outre une interface d'entrée 401 destinée à recevoir les données d'événement, les messages indiquant les actions mises en œuvre par les entités du deuxième type, les entrées d'utilisateurs, les requêtes d'enregistrement des entités, et une interface de sortie 406 destinée à transmettre des ordres aux entités du second type (selon le premier mode de réalisation) ou des notifications indiquant de nouvelles publications ou de nouvelles entrées de l'utilisateur (commentaires par exemple) sur le fil d'actualité.

Le dispositif 400 peut en outre comporter un processeur de signal numérique (DSP) 402.

La présente invention ne se limite pas aux formes de réalisation décrites ci-avant à titre d'exemples ; elle s'étend à d'autres variantes.

De plus, les exemples donnés impliquent trois entités connectées et un unique point d'accès. Une telle architecture est donnée à titre illustratif uniquement et ne saurait restreindre l'invention à ces seuls exemples.

## Revendications

1. Procédé de gestion d'une pluralité d'entités (10.1 ;10.2 ;10.3), chaque entité appartenant à au moins un type parmi un premier type et un second type, une entité du second type (10.2 ;10.3) étant associée à un ensemble de règles comprenant des données d'événements en association avec des actions respectives, une entité du premier type (10.1) étant apte à publier une ou plusieurs données d'évènements sur un fil d'actualités d'un utilisateur, le procédé comprenant les étapes suivantes dans une unité de gestion (12) :
- réception d'une donnée d'événement à publier depuis une première entité (10.1) du premier type ; suivi d'une
- publication de la donnée d'évènement reçue de la première entité du premier type sur le fil d'actualités ;
- et d'une détection d'une correspondance entre une règle associée à une deuxième entité (10.3) du second type et la donnée d'événement publiée ;
- transmission à la deuxième entité du second type de l'action comprise dans la règle mise en correspondance avec la donnée d'évènement publiée.

2. Procédé selon la revendication 1, comprenant une étape préalable d'enregistrement des première et deuxième entités en tant qu'entités de l'utilisateur, auprès de l'unité de gestion (12).

3. Procédé selon la revendication 2, comprenant en outre, suite à l'enregistrement d'une entité du deuxième type (10.2 ;10.3) en tant qu'entité de l'utilisateur auprès de l'unité de gestion (12), le stockage d'un ensemble de règles en association avec l'entité du deuxième type enregistrée, dans une base de données (405),
dans lequel l'unité de gestion est apte à mettre en œuvre la détection de la correspondance entre la règle associée à la deuxième entité (10.3) du second type et la donnée d'événement publiée, par consultation de la base de données, et à transmettre un ordre à la deuxième entité du second type, ledit ordre identifiant l'action comprise dans la règle mise en correspondance avec la donnée d'évènement publiée.

4. Procédé selon la revendication 3, comprenant en outre, suite à l'enregistrement d'une entité du deuxième type (10.2 ;10.3) auprès de l'unité de gestion (12), la transmission d'un ensemble de règles de l'entité du deuxième type à l'unité de gestion en vue du stockage de l'ensemble de règles en association avec l'entité du deuxième type enregistrée dans la base de données.

5. Procédé selon la revendication 3 ou 4, dans lequel les ensembles de règles stockées dans la base de données (405) sont modifiables par un utilisateur via une interface utilisateur.

6. Procédé selon la revendication 1 ou 2, dans lequel chaque entité du deuxième type (10.2 ;10.3) stocke localement un ensemble de règles, et dans lequel, sur publication d'une donnée d'évènement, chaque entité du deuxième type compare la donnée d'évènement publiée avec l'ensemble de règles stocké localement en vue de la détection d'une correspondance entre une règle et la donnée d'évènement publiée.

7. Procédé selon l'une des revendications précédentes, comprenant en outre la publication, par la deuxième entité (10.3), d'un message sur le fil d'actualités, ledit message indiquant l'action mise en œuvre par la deuxième entité.

8. Procédé selon la revendication 7, comprenant en outre, sur réception d'une entrée de l'utilisateur à associer au message publié par la deuxième entité (10.3), une étape de mise à jour de la règle correspondant à la donnée d'événement publiée, en fonction de l'entrée de l'utilisateur.

9. Procédé selon l'une des revendications précédentes, dans lequel au moins une entité du premier type (10.1) est un capteur apte à publier une donnée de mesure en tant que donnée d'évènement.

10. Procédé selon l'une des revendications précédentes, dans lequel au moins une règle comprend en outre un identifiant d'une entité du premier type (10.1),
et dans lequel, la deuxième entité du second type met en œuvre l'action comprise dans la règle mise en correspondance avec la donnée d'évènement publiée, uniquement si l'identifiant d'entité du premier type compris dans la règle correspond à la première entité ayant publié la donnée d'évènement.

11. Programme informatique comportant des instructions pour la mise en œuvre du procédé selon l'une quelconque des revendications précédentes, lorsque ces instructions sont exécutées par un processeur.

12. Système comprenant une unité de gestion, une pluralité d'entités (10.1 ;10.2 ;10.3), chaque entité appartenant à au moins un type parmi un premier type et un second type, une entité du second type (10.2 ;10.3) étant associée à un ensemble de règles comprenant des données d'événements en association avec des actions respectives, une entité du premier type (10.1) étant apte à publier une ou plusieurs données d'évènements sur un fil d'actualités d'un utilisateur ; dans lequel l'unité de gestion (12) est agencée pour recevoir une donnée d'événement à publier depuis une première entité (10.1) du premier type et déclencher
- une publication de la donnée d'évènement reçue sur le fil d'actualité,
- une détection d'une correspondance entre une règle associée à une deuxième entité (10.3) du second type, et la donnée d'événement publiée ; et
et dans lequel l'unité de gestion (12) est agencée pour transmettre l'action comprise dans la règle mise en correspondance avec la donnée d'évènement publiée.

## Patentansprüche

1. Verfahren zur Verwaltung einer Vielzahl von Einheiten (10.1; 10.2; 10.3), wobei jede Einheit zu mindestens einem Typ eines ersten Typs und eines zweiten Typs gehört, wobei eine Einheit des zweiten Typs (10.2; 10.3) mit einem Satz Regeln assoziiert ist, der Ereignisdatenelemente in Assoziation mit jeweiligen Aktionen beinhaltet, wobei eine Einheit des ersten Typs (10.1) dazu fähig ist, ein oder mehrere Ereignisdatenelemente in einem Newsfeed eines Benutzers zu veröffentlichen, wobei das Verfahren die folgenden Schritte in einer Verwaltungseinheit (12) beinhaltet:
- Empfang eines zu veröffentlichenden Ereignisdatenelements von einer ersten Einheit (10.1) des ersten Typs; gefolgt von einer
- Veröffentlichung des von der ersten Einheit des ersten Typs empfangenen Ereignisdatenelements in dem Newsfeed;
- und einer Detektion einer Zuordnung zwischen einer mit einer zweiten Einheit (10.3) des zweiten Typs assoziierten Regel und dem veröffentlichten Ereignisdatenelement;
- Übertragung, an die zweite Einheit des zweiten Typs, der Aktion, die in der Regel enthalten ist, die dem veröffentlichten Ereignisdatenelement zugeordnet wurde.

2. Verfahren nach Anspruch 1, das einen vorausgehenden Schritt des Registrierens, bei der Verwaltungseinheit (12), der ersten und zweiten Einheiten als Einheiten des Benutzers beinhaltet.

3. Verfahren nach Anspruch 2, das ferner anschließend an das Registrieren, bei der Verwaltungseinheit (12), einer Einheit des zweiten Typs (10.2; 10.3) als Einheit des Benutzers das Speichern eines Satzes Regeln in Assoziation mit der registrierten Einheit des zweiten Typs in einer Datenbank (405) beinhaltet,
wobei die Verwaltungseinheit dazu fähig ist, die Detektion der Zuordnung zwischen der mit der zweiten Einheit (10.3) des zweiten Typs assoziierten Regel und dem veröffentlichten Ereignisdatenelement durch eine Abfrage der Datenbank umzusetzen und einen Befehl an die zweite Einheit des zweiten Typs zu übertragen, wobei der Befehl die Aktion identifiziert, die in der Regel, die dem veröffentlichten Ereignisdatenelement zugeordnet wurde, enthalten ist.

4. Verfahren nach Anspruch 3, das ferner anschließend an das Registrieren, bei der Verwaltungseinheit (12), einer Einheit des zweiten Typs (10.2; 10.3) das Übertragen eines Satzes Regeln der Einheit des zweiten Typs an die Verwaltungseinheit beinhaltet, um den Satz Regeln in Assoziation mit der registrierten Einheit des zweiten Typs in der Datenbank zu speichern.

5. Verfahren nach Anspruch 3 oder 4, wobei die in der Datenbank (405) gespeicherten Sätze Regeln von einem Benutzer über eine Benutzerschnittstelle verändert werden können.

6. Verfahren nach Anspruch 1 oder 2, wobei jede Einheit des zweiten Typs (10.2; 10.3) einen Satz Regeln lokal speichert und wobei bei Veröffentlichung eines Ereignisdatenelements jede Einheit des zweiten Typs das veröffentlichte Ereignisdatenelement mit dem lokal gespeicherten Satz Regeln vergleicht, um eine Zuordnung zwischen einer Regel und dem veröffentlichen Ereignisdatenelement zu detektieren.

7. Verfahren nach einem der vorhergehenden Ansprüche, das ferner die Veröffentlichung, durch die zweite Einheit (10.3), einer Mitteilung in dem Newsfeed beinhaltet, wobei die Mitteilung die durch die zweite Einheit umgesetzt Aktion angibt.

8. Verfahren nach Anspruch 7, das ferner bei Empfang einer Eingabe des Benutzers, die mit der durch die zweite Einheit (10.3) veröffentlichten Mitteilung zu assoziieren ist, einen Schritt des Aktualisierens der Regel, die dem veröffentlichen Ereignisdatenelement zugeordnet ist, in Abhängigkeit von der Eingabe des Benutzers beinhaltet.

9. Verfahren nach einem der vorhergehenden Ansprüche, wobei mindestens eine Einheit des ersten Typs (10.1) ein Sensor ist, der dazu fähig ist, ein Messdatenelement als Ereignisdatenelement zu veröffentlichen.

10. Verfahren nach einem der vorhergehenden Ansprüche, wobei mindestens eine Regel ferner eine Kennung einer Einheit des ersten Typs (10.1) beinhaltet und wobei die zweite Einheit des zweiten Typs die Aktion, die in der Regel, die dem veröffentlichten Ereignisdatenelement zugeordnet wurde, enthalten ist, nur dann umsetzt, wenn die Kennung der Einheit des ersten Typs, die in der Regel enthalten ist, der ersten Einheit, die das Ereignisdatenelement veröffentlicht hat, zugeordnet ist.

11. Computerprogramm, das Anweisungen zum Umsetzen des Verfahrens nach einem der vorhergehenden Ansprüche umfasst, wenn diese Anweisungen von einem Prozessor ausgeführt werden.

12. System, beinhaltend eine Verwaltungseinheit, eine Vielzahl von Einheiten (10.1; 10.2; 10.3), wobei jede Einheit zu mindestens einem Typ eines ersten Typs und eines zweiten Typs gehört, wobei eine Einheit des zweiten Typs (10.2; 10.3) mit einem Satz Regeln assoziiert ist, der Ereignisdatenelemente in Assoziation mit jeweiligen Aktionen beinhaltet, wobei eine Einheit des ersten Typs (10.1) dazu fähig ist, ein oder mehrere Ereignisdatenelemente in einem Newsfeed eines Benutzers zu veröffentlichen;
wobei die Verwaltungseinheit (12) dazu angeordnet ist, ein zu veröffentlichendes Ereignisdatenelement von einer ersten Einheit (10.1) des ersten Typs zu empfangen und Folgendes auszulösen:
- eine Veröffentlichung des empfangenen Ereignisdatenelements in dem Newsfeed,
- eine Detektion einer Zuordnung zwischen einer mit einer zweiten Einheit (10.3) des zweiten Typs assoziierten Regel und dem veröffentlichten Ereignisdatenelement;
und wobei die Verwaltungseinheit (12) dazu angeordnet ist, die Aktion, die in der Regel, die dem veröffentlichten Ereignisdatenelement zugeordnet wurde, enthalten ist, zu übertragen.

## Claims

1. Method for managing a plurality of entities (10.1; 10.2; 10.3), each entity belonging to at least one type from among a first type and a second type, an entity of the second type (10.2; 10.3) being associated with a set of rules comprising event data in association with respective actions, an entity of the first type (10.1) being able to publish one or more event data on a user's newsfeed, the method comprising the following steps in a management unit (12) :
- receiving an event datum to be published from a first entity (10.1) of the first type; followed by
- publishing the event datum received from the first entity of the first type on the newsfeed;
- and detecting a correspondence between a rule associated with a second entity (10.3) of the second type and the published event datum;
- transmitting the action contained in the rule matched with the published event datum to the second entity of the second type.

2. Method according to Claim 1, comprising a prior step of registering the first and second entities as entities of the user with the management unit (12).

3. Method according to Claim 2, further comprising, following the registration of an entity of the second type (10.2; 10.3) as an entity of the user with the management unit (12), storing a set of rules in association with the registered entity of the second type in a database (405),
wherein the management unit is able to implement detection of the correspondence between the rule associated with the second entity (10.3) of the second type and the published event datum by consulting the database, and to transmit an order to the second entity of the second type, said order identifying the action contained in the rule matched with the published event datum.

4. Method according to Claim 3, further comprising, following the registration of an entity of the second type (10.2; 10.3) with the management unit (12), transmitting a set of rules from the entity of the second type to the management unit in order to store the set of rules in association with the registered entity of the second type in the database.

5. Method according to Claim 3 or 4, wherein the sets of rules stored in the database (405) can be modified by a user via a user interface.

6. Method according to Claim 1 or 2, wherein each entity of the second type (10.2; 10.3) locally stores a set of rules, and wherein, on publication of an event datum, each entity of the second type compares the published event datum with the locally stored set of rules in order to detect a correspondence between a rule and the published event datum.

7. Method according to one of the preceding claims, further comprising the second entity (10.3) publishing a message on the newsfeed, said message indicating the action implemented by the second entity.

8. Method according to Claim 7, further comprising, on receiving an input by the user to be associated with the message published by the second entity (10.3), a step of updating the rule corresponding to the published event datum on the basis of the user's input.

9. Method according to one of the preceding claims, wherein at least one entity of the first type (10.1) is a sensor that is able to publish a measurement datum as an event datum.

10. Method according to one of the preceding claims, wherein at least one rule further comprises an identifier of an entity of the first type (10.1), and wherein the second entity of the second type implements the action contained in the rule matched with the published event datum only if the identifier of the entity of the first type contained in the rule corresponds to the first entity that has published the event datum.

11. Computer program including instructions for implementing the method according to any one of the preceding claims when these instructions are executed by a processor.

12. System comprising a management unit, a plurality of entities (10.1; 10.2; 10.3), each entity belonging to at least one type from among a first type and a second type, an entity of the second type (10.2; 10.3) being associated with a set of rules comprising event data in association with respective actions, an entity of the first type (10.1) being able to publish one or more event data on a user's newsfeed;
wherein the management unit (12) is designed to receive an event datum to be published from a first entity (10.1) of the first type and to trigger
- publishing of the received event datum on the newsfeed,
- detection of a correspondence between a rule associated with a second entity (10.3) of the second type and the published event datum;
and wherein the management unit (12) is designed to transmit the action contained in the rule matched with the published event datum.
